# EUROPEAN PATENT APPLICATION

(11) **EP 4 318 770 A1**
(43) Date of publication of application: **07.02.2024**
(21) Application number: 22775033.8
(22) Date of filing: 07.03.2022
(51) Int. Cl.: H01M 50/35, H01M 50/204, H01M 50/213, H01M 50/291, H01M 50/293, H01M 50/342

(54) **POWER SUPPLY DEVICE**

(30) Priority: 26.03.2021 JP 2021054156
(71) Applicant: Panasonic Energy Co., Ltd., Osaka 570-8511 (JP)
(72) Inventor: MATSUSHITA, Fumiya, Kadoma-shi, Osaka 571-0057 (JP); MATSUBARA, Shota, Kadoma-shi, Osaka 571-0057 (JP)
(74) Representative: Novagraaf International SA
(86) International application number: PCT/JP2022/009587
(87) International publication number: WO 2022/202237

(57) **Abstract**

A power supply device including secondary battery cells with end surfaces thereof facing each other secures safety and has a small size. The power supply device (100) includes battery cells (1) each including a discharge valve (3) for discharging gas in response to an increase of an internal pressure; battery blocks (10) each holding the battery cells (1) such that exterior cans (2) are parallel and end surfaces of the exterior cans (2) are flush with one plane; a shield plate (40) disposed in an insulation space (30) separating the battery blocks (10) such that a block surface of one of adjacent battery blocks faces a block surface of another of the adjacent battery blocks (10) across the insulation space; and a supporter (50) supporting the shield plate (40). The supporter is provided at an inner side than an outer peripheral part of the block surface of the battery blocks (10) facing each other. The shield plate (40) supported by the supporter (50) includes an outer peripheral part that is a free end (42) displaceable with respect to the supporter (50).

## Description

### TECHNICAL FIELD

The present invention relates to a power supply device.

### BACKGROUND ART

Power supply devices such as battery packs are used as power supplies for power-assisted bicycles, electric motorcycles, power tools, electric cleaners, and the like. In a power supply device, a lot of secondary battery cells are arranged and connected in series or in parallel to increase output and capacity. For example, power supply device 90 of PTL 1 shown in FIG. 12 includes battery units 92 each including secondary battery cells 91 arranged in parallel to each other. Battery units 92 are coupled to each other in a position in which end surfaces of secondary battery cells 91 face each other, and are accommodated in a housing.

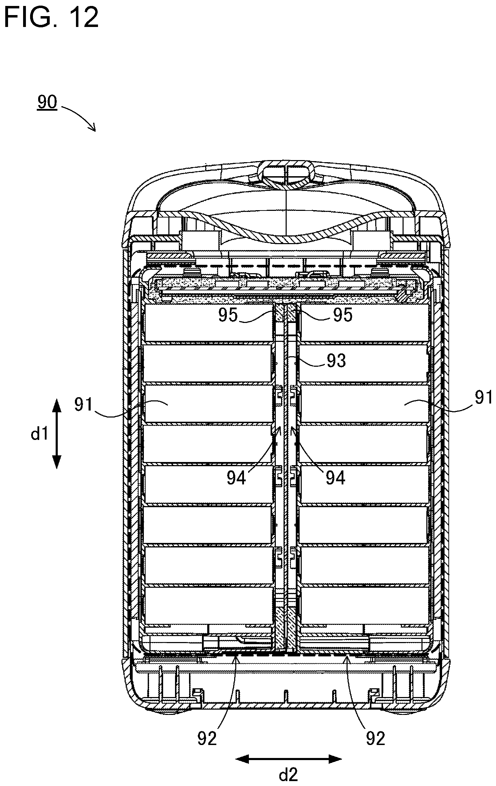

Each secondary battery cell 91 includes a safety valve. When a pressure in an exterior can becomes high, the high pressure is detected, and the safety valve is opened to discharge high-pressure and high-temperature gas inside the exterior can to the outside of the cell. Since power supply device 90 of FIG. 12 includes secondary battery cells 91 that are disposed such that the end surfaces of secondary battery cells 91 face each other, when high-temperature gas is ejected from any one of secondary battery cells 91, other secondary battery cell 91 adj acent to any one of secondary battery cells 91 and being disposed with the end surfaces facing the any one of secondary battery cells 91 is irradiated with the high-temperature gas and damaged.

Then, in power supply device 90 of FIG. 12, heat-resistant sheet 93 is disposed between battery units 92 facing each other, and exhaust chambers 94 and 94 for exhausting the ejected gas are provided on both surfaces of heat-resistant sheet 93. Furthermore, outer peripheral frame parts 95 and 95 are formed to hold heat-resistant sheet 93. Outer peripheral frame parts 95 and 95 are formed along the outer peripheral parts of heat-resistant sheet 93. Outer peripheral frame parts 95 and 95 are disposed on both sides of heat-resistant sheet 93 and between facing battery units 92, and the outer peripheral part of heat-resistant sheet 93 is supported and heat-resistant sheet 93 is held between battery units 92.

In power supply device 90 of FIG. 12, in a case of increasing secondary battery cells 91, secondary battery cells 91 may be stacked in direction d1 which is a longitudinal direction in FIG. 12. On the other hand, for example, like in a case where a power supply device is used for a power-assisted bicycle, the power supply device may require an elongated long housing due to a limit by a place in which the power supply device is disposed. In this case, while the number of stacks in direction d1 in FIG. 12 in each battery unit is decreased, and battery units 92 is stacked in direction d2 that is perpendicular to direction d1. In such a configuration, heat-resistant sheet 93 and exhaust chambers 94 and 94 are required to be respectively provided in the interfaces of the battery units facing each other to secure an exhaust gas flow path between the battery units.

However, when the number of couplings of the battery units in direction d2 is increased in each interface of the battery units, a heat-resistant sheet and exhaust chambers provided on both sides thereof are needed, the size of the housing in the d2 direction was likely to increase cumulatively.

### Citation List

### Patent Literature

PTL 1: International Publication No. WO2019/065169

### SUMMARY OF THE INVENTION

### Technical Problem

One object of the present invention is to provide a power supply device including secondary battery cells such that end surfaces of the secondary battery cells face each other which secures safety and has a small size.

### Solution to Problem

A power supply device according to an aspect of the present invention includes: a plurality of battery cells including exterior cans and discharge valves, each of the plurality of battery cells including a corresponding one of the exterior cans and a corresponding one of the discharge valves, the corresponding one of the exterior cans having a tubular shape extending in one direction, the corresponding one of the discharge valves being provided at an end surface of the tubular shape of the corresponding one of the exterior cans, the corresponding one of the discharge valves being configured to discharge gas in response to an increase of an internal pressure of the corresponding one of the exterior cases; a plurality of battery blocks holding the plurality of battery cells, each of the plurality of battery blocks holding two or more battery cells out of the plurality of battery cells such that the exterior cans are parallel to one another and end surfaces of the exterior cans of the two or more battery cells are flush with a plane; a shield plate disposed in an insulation space between adjacent battery blocks out of the plurality of the battery blocks, a block surface of one of the adjacent battery blocks at which end surfaces of the exterior cans of the two or more battery cells faces, across the insulation space, a block surface of another of the adjacent battery blocks at which end surfaces of the exterior cans of the two or more battery cells; and a supporter supporting the shield plate, the supporter being provided on an inner side of outer peripheral parts of the block surfaces of the plurality of battery blocks facing each other. The shield plate supported by the supporter includes an outer peripheral part that is a free end displaceable with respect to the supporter.

### Advantageous Effect of the Invention

In the above-mentioned configuration, the shield plate has a displaceable free end. Even if the discharge valve is opened and gas is ejected in any one of battery cells, high-temperature and high-pressure gas presses the shield plate, and the shield plate is displaced toward the facing battery block in the insulation space, thereby securing a wide flow path for discharging the ejected gas. Thus, although an insulation space is not previously provided on both sides of the shield plate, an insulation space can be shared by battery blocks at both sides. The size of the entire power supply device is reduced accordingly.

### BRIEF DESCRIPTION OF THE DRAWINGS

FIG. 1 is a perspective view of a power supply device in accordance with an exemplary embodiment of the present invention.
FIG. 2 is an exploded perspective view with an enlarged side view of a main part of the power supply device of FIG. 1 with an exterior case removed.
FIG. 3 is an exploded perspective view of a battery assembly shown in FIG. 2.
FIG. 4 is a sectional view of the battery assembly taken on line IV-IV shown in FIG. 2.
FIG. 5 is a sectional view of the battery assembly shown in FIG. 4 for showing a state in which gas is ejected from the battery cell.
FIG. 6 is a sectional view of another battery assembly shown in FIG. 4 for showing a state in which gas is ejected from the battery cell.
FIG. 7 is a partial sectional view of a power supply device in accordance with Exemplary Embodiment 2.
FIG. 8 is a sectional view of a battery cell shown in FIG. 7 for showing a state in which gas is ejected from the battery cell.
FIG. 9 is a partial sectional view of a power supply device in accordance with a modified example.
FIG. 10 is a partial sectional view of a power supply device in accordance with Exemplary Embodiment 3.
FIG. 11 is a sectional view of a battery cell shown in FIG. 10 for showing a state in which gas is ejected from the battery cell.
FIG. 12 is a sectional view of a conventional power supply device.
FIG. 13 is a perspective view of another conventional power supply device.
FIG. 14 is a sectional view of the power supply device taken on line XIV-XIV shown in FIG. 13.

### DETAILED DESCRIPTION OF PREFERRED EMBODIMENT

A power supply device of one embodiment of the present invention may include the following configuration in addition to the above-mentioned configuration. In the power supply device, the supporter may include: a first supporter provided on a first block surface which is the block surface of the one of the adjacent battery blocks facing each other; and a second supporter provided on a second block surface which is the block surface of the another of the adjacent battery blocks at a position corresponding to the first supporter, the second supporter being connected to the first supporter through the shield plate.

In the power supply device, the shield plate may have a shield-plate opening therein at a position corresponding to the supporter, and the supporter may be inserted into the shield-plate opening.

In the power supply device, the supporter may be one of a plurality of supporters provided on end surfaces of the plurality of battery blocks.

In the power supply device, the supporter may be provided at a middle part of each end surface of the battery block, and the shield plate may be movable in a rotation direction about the supporter. In this configuration, the end part of the shield plate near a battery cell in which gas is ejected moves away from the battery cell, and a flow path for discharging gas is formed. On the other hand, the end part at the opposite side of the shield plate is movable toward the battery cell in which gas is ejected so as to close the insulation space. As a result, a flow path for discharging gas is formed toward a battery cell at which gas is ejected, so that ejected gas can be discharged in the shortest path.

The power supply device may further include a plurality of auxiliary support parts provided between the block surfaces of the adj acent battery blocks facing each other, the plurality of auxiliary support parts being configured to melt with heat. In this configuration, the shield plate is held in the insulation space by the supporter and the auxiliary support part. On the other hand, if high-temperature and high-pressure gas is ejected from any one of the secondary battery cells, the auxiliary support parts are melted with heat, gas is smoothly discharged without preventing displacement of the shield plate or discharge of gas.

In the power supply device, the shield plate may be made of carbon fibers, silica fibers, glass fibers, or flexible materials, the flexible materials including carbon fibers, silica fibers, or glass fibers and impregnated with resin. In this configuration, when gas is ejected, a flexible shield plate may warp, and a flow path for discharging gas can be formed easily.

Furthermore, the shield plate may be made of carbon fibers, silica fibers, glass fibers, or flexible materials, the flexible materials including carbon fibers, silica fibers, or glass fibers and impregnated with resin. In this configuration, the rigidity of the shield plate can be enhanced.

Hereinafter, exemplary embodiments of the present invention are described with reference to the drawings. However, the exemplary embodiments described below are deemed to be merely illustrative of a configuration for giving a concrete form to the technical idea of the present invention, and therefore, the present invention is not limited to the following. Furthermore, members set forth in claims are never limited to members in the exemplary embodiments. In particular, a size, a material, a shape, relative positioning, or the like, of the component members described in the exemplary embodiments is not aimed at limiting the scope of the present invention only thereto unless otherwise described but merely illustrative. Note here that a size, a positional relationship, or the like, of the members in the respective drawings may be exaggerated for clarifying the description. Furthermore, in the following description, the same or similar members are represented by the same names and reference symbols, and the detailed description thereof is appropriately omitted. As for each component of the present invention, one member may serve as a plurality of components by forming the plurality of components with the same member. On the contrary, a function of one member may be shared by the plurality of members. Furthermore, details described in one exemplary embodiment may be applied to the other embodiments or the like.

Examples in which the power supply device mentioned below is mainly applied to the power supplies for driving electric vehicles such as electric bicycles, electric scooters, electric carts, and electric vehicles that run only on motors, are described. Note here that the power supply device of the present invention may be used in hybrid vehicles that run on both engines and motors, or in applications where high power is required other than electric vehicles, for example, power storage devices for household or factory use.

### Exemplary Embodiment 1

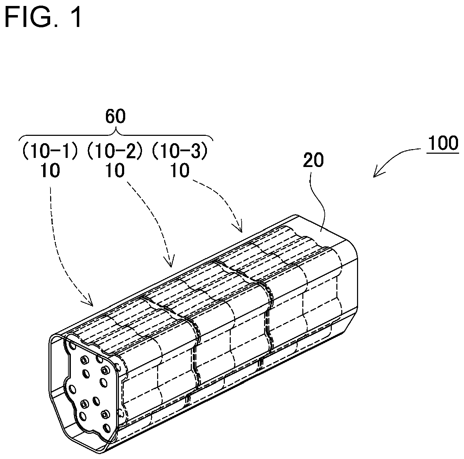

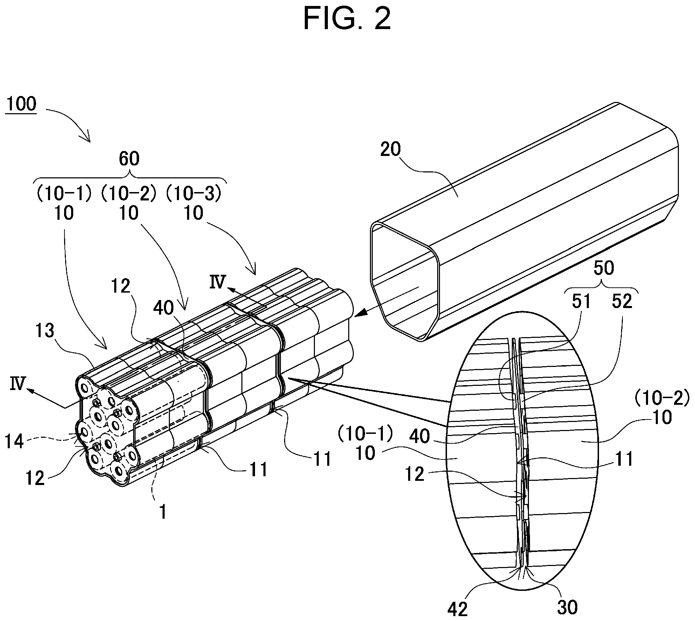

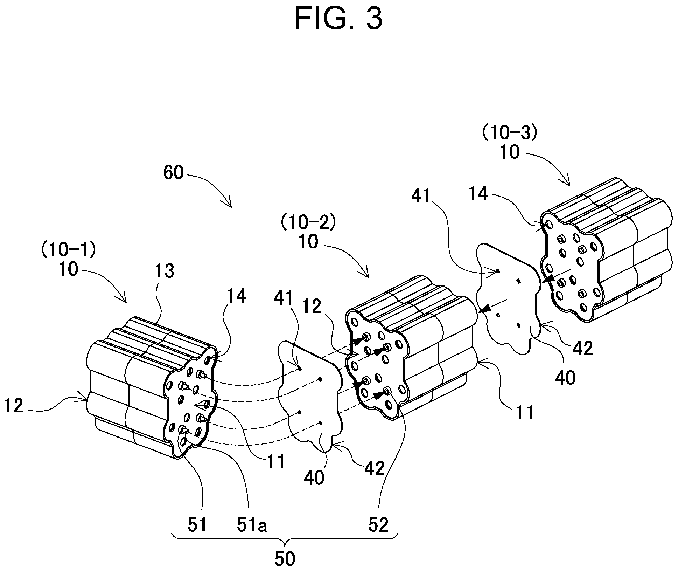

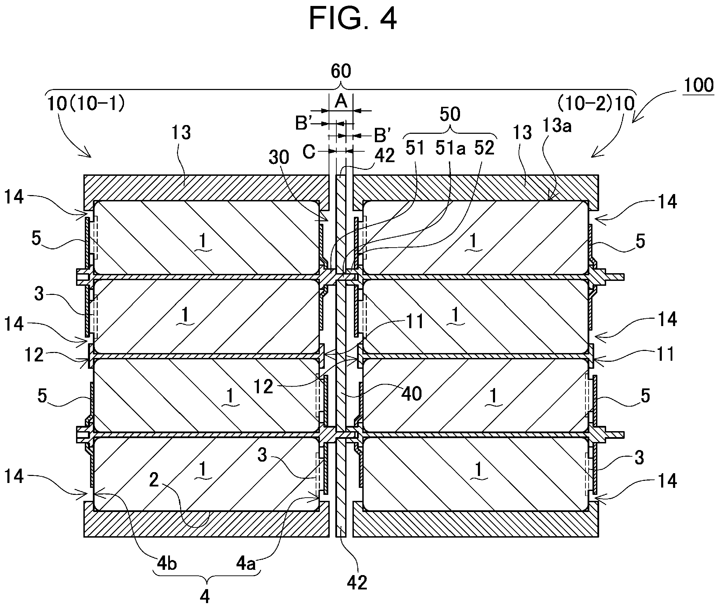

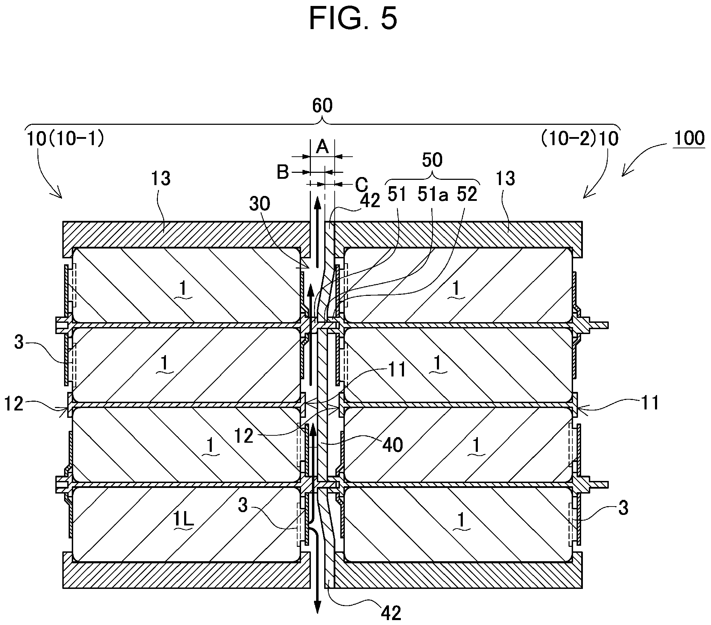

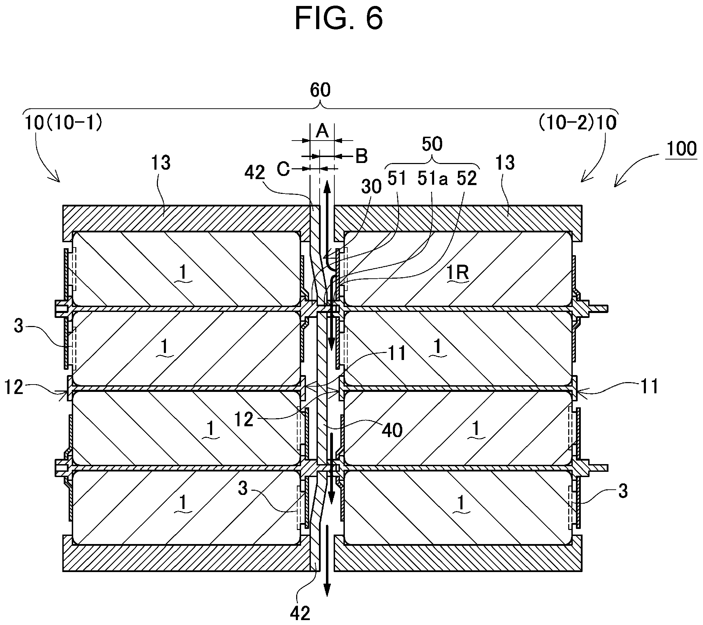

FIGs. 1 to 6 show a power supply device in accordance with Exemplary Embodiment 1. FIG. 1 is a perspective view of a power supply device in accordance with one exemplary embodiment of the present invention. FIG. 2 is an exploded perspective view with an enlarged side view of a main part showing of the power supply device shown in FIG. 1 with an exterior case removed. FIG. 3 is an exploded perspective view of a battery assembly shown in FIG. 2. FIG. 4 is a sectional view of the battery assembly taken on line IV-IV shown in FIG. 2. FIG. 5 is a sectional view of the battery assembly for showing a state in which gas is ejected from a battery cell of FIG. 4. FIG. 6 is a sectional view of the battery assembly for showing a state in which gas is ejected from another battery cell of FIG. 4.

### Power Supply Device 100

Power supply device 100 shown in these drawings includes battery cells 1 having substantially cylindrical shapes, battery blocks 10 (10-1 to 10-3 in e.g., FIG. 1) including and holding battery cells 1, battery assembly 60 in which battery blocks 10 are connected to one another, and exterior case 20 accommodating battery assembly 60 therein. An outline of power supply device 100 will be described below, and details of the members are described later.

In power supply device 100 shown in FIG. 2, battery blocks 10-1 to 10-3 are disposed and connected to one another in an axial direction of cylindrical battery cells 1. For example, first block surface 11 of battery block 10-1 is away from second block surface 12 of adjacent battery block 10-2 with insulation space 30 between first block surface 11 and second block surface 12 such that first block surface 11 faces second block surface 12 across insulation space 30.

Power supply device 100 further includes shield plate 40 disposed in insulation space 30. Supporter 50 supports shield plate 40. Supporter 50 is provided at an inner side from the outer peripheral part of each first block surface 11 of two or more battery blocks 10 and each second block surface 12 of two or more battery blocks 10 facing each other. Shield plate 40 thus supported by supporter 50 provided at the inner side of the block surface has outer peripheral part as free ends 42 displaceable with respect to supporter 50.

Herein, "free end 42" refers to an outer peripheral part of shield plate 40 and a part in the vicinity thereof, which is a part that is displaceable, that is, deformable, or movable, because the outer peripheral part of shield plate 40 and the vicinity thereof are not supported by, e.g., the supporter.

The outer peripheral part of shield plate 40 is free end 42, as shown in FIG. 5. If discharge valve 3 is opened in battery cell 1L of battery block 10-1 and gas is ejected, shield plate 40 is pressed by high-temperature and high-pressure gas, the outer peripheral part of shield plate 40 as free end 42 is displaced toward battery block 10-2 inside insulation space 30. This configuration provides flow path B for discharging the ejected gas in a side near battery block 10-1 in which gas is ejected. At this moment, a side near battery block 10-2 is closed by shield plate 40. As a result, insulation space 30 that is enough to form one flow path B in the outer peripheral parts of the interfaces of battery blocks 10-1 and 10-2 facilitates discharging gas.

Similarly, when gas is ejected from battery cell 1R of battery block 10-2, as shown in FIG. 6, free ends 42 of shield plate 40 are displaced toward battery block 10-1, and flow path B is formed in a side near battery block 10-2. Unlike conventional power supply device 90 shown in FIG. 12, even if two wide exhaust chambers 94 may not be provided at both sides of heat-resistant sheet 93, one insulation space 30 is thus shared by battery blocks 10-1 and 10-2 at both ends of heat-resistant sheet 93.

Thus, in power supply device 100 in accordance with the present embodiment, battery blocks 10 are arranged in the axial direction of battery cells 1, and reduces the size of battery blocks 10 in the arrangement direction accordingly. Since power supply device 100 has an elongated shape, power supply device 100 is suitably applied and easily attached to bicycles having various uses of applications, such as power-assisted bicycles, and sport-type bicycles. Power supply device 100 is small and inconspicuous, thus enhancing the appearance of such bicycles.

### Battery Cell 1

As shown in Fig. 4, each battery cell 1 supplying electric power to power supply device 100 includes exterior can 2 having substantially a tubular shape extending in one direction. Each battery cell 1 includes discharge valve 3 on one end surface of the tubular shape. Discharge valve 3 is configured to discharge gas in response to an increase of an internal pressure of the can. Each battery cell 1 further includes end electrodes 4 at both ends thereof. In this battery cell 1, an opening of exterior can 2 made of metal, such as aluminum, is airtightly sealed with a sealing plate. A convex electrode is provided on the sealing plate and is used as first end electrode 4a, and the bottom of the exterior can is used as second end electrode 4b. A discharge port of discharge valve 3 is disposed close to the convex electrode, or on the bottom surface of the exterior can.

For battery cell 1, for example, a lithium-ion battery of with cylindrical battery can be used. A lithium-ion battery has a large capacity relative to its size and weight, and can increase the total capacity of the power supply device. However, a battery cell of the power supply device of the present invention is not particularly limited to a lithium-ion battery. For a battery cell, other chargeable secondary batteries can be used. Furthermore, in power supply device 100 shown in, for example, FIG. 4, battery cell 1 is a cylindrical battery, but the battery cell may be a rectangular battery. Each battery cell 1 is connected to adjacent battery cells 1 in series or in parallel to one another by welding lead plate 5 to end electrodes 4 at both ends. The type and the number of battery cells 1 may be appropriately adjusted depending on electric energy required. For example, ten battery cells of about 5 A/h are used in this exemplary embodiment.

### Battery Block 10

Battery block 10 includes and holds battery cells 1 arranged in parallel to one another. Battery assembly 60 mentioned below includes battery blocks 10 arranged in the axial direction of battery cell 1.

### Battery Holder 13

Each battery block 10 includes battery holder 13 having substantially a tubular shape and holds battery cells 1. Battery holder 13 is produced by molding insulating materials such as plastic. Battery holder 13 holds exterior cans 2 of battery cells 1 parallel to one another, so that end surfaces of exterior cans 2 are flush with the same plane.

Battery holder 13 includes insertion section 13a into which battery cell 1 is inserted and disposed in a predetermined position. In power supply device 100 of FIG. 4, since battery cell 1 is a cylindrical battery, insertion part 13a has a circular columnar shape.

Battery holder 13 has first block surface 11 and second block surface 12 at both end surface thereof. The end surfaces of exterior cans 2 are arranged in the same plane on first block surface 11 and second block surface 12. Both ends of battery holder 13 are closed with first block surface 11 and second block surface 12. First block surface 11 and second block surface 12 have openings 14 from which the battery end parts are exposed, respectively. Opening 14 allows the end surfaces of battery cells 1 inserted into insertion section 13a to be exposed to the outside. The end surface of battery cell 1 exposed from opening 14 is fixed by welding lead plate 5 as end electrode 4. In FIGs. 1 to 3, the lead plate is omitted for explanation.

### Battery Assembly 60

Battery assembly 60 includes battery blocks 10 arranged in the axial direction of battery cell 1 and connected to one another. As shown in, e.g., FIG. 1, in this exemplary embodiment, three battery blocks 10-1 to 10-3 are connected, but the number of battery blocks 10 may be appropriately adjusted depending on electric power required. Battery assembly 60 is accommodated in exterior case 20. Exterior case 20 may further include a circuit board on which a charge and discharge circuit for controlling charging and discharging of battery cells 1, a protection circuit, and the like, are mounted.

### Insulation Space 30

Insulation space 30 separates adjacent battery blocks 10 of battery assembly 60 from each other. For example, as shown in FIG. 5, first block surface 11 of battery block 10-1 and second block surface 12 of adjacent battery block 10-2 face each other across insulation space 30 and are separated from each other with insulation space 30 between first block surface 11 of battery block 10-1 and second block surface 12 of adj acent battery block 10-2. The width of insulation space 30, in other words, separation distance A between battery blocks 10-1 and 10-2 is about the sum of the width of one flow path B, and a thickness C of shield plate 40. The width of the flow path B may be appropriately adjusted depending on types of batteries, and ranges from about 3 mm to 4 mm in accordance with the present embodiment.

In battery assembly 60 including battery cells 1 with the end surfaces thereof facing insulation space 30, if discharge valve 3 of any one of, e.g., battery cells 1 of battery block 10-1 is opened, high-temperature ejected gas discharged from the discharge port is ejected toward second block surface 12 of battery block 10-2. The high-temperature ejected gas jetted toward the facing surface of battery cell 1 in the opposite place may cause the thermal runaway of battery cell 1.

### Shield Plate 40

Thus, power supply device 100 of FIG. 3 to FIG. 6 includes shield plate 40 disposed substantially in the middle of insulation space 30. If gas is discharged from any one of battery cells 1, shield plate 40 prevents the gas from being ejected into facing another battery block 10. The size of shield plate 40 may have an arbitrary size as long as gas ejected into facing battery block 10 can be avoided. In this exemplary embodiment, the size and shape of the shield plate are substantially identical to those of first block surface 11 and second block surface 12 of battery block 10.

Shield plate 40 may be made of a heat-resistant plate with a heat-resistant temperature, that is, a melting point, which is not melted by the ejected gas discharged from discharge valve 3. Shield plate 40 may have flexibility. For example, in Embodiment 1, shield plate 40 may be made of carbon fibers, silica fibers, glass fibers, or flexible materials including these fibers impregnated with resin. When gas is ejected, shield plate 40 with flexibility deforms with a pressure of high-temperature and high-pressure gas, and easily form the below-mentioned flow path B for discharging gas accordingly.

Shield plate 40 shown in Fig. 4 is disposed parallel to first block surface 11 and second block surface 12 of the adjacent battery blocks. Then, flow path B' with a width which is about 1/2 of the width of flow path B is formed on each of both sides of shield plate 40. Thus, the separation distance A between battery blocks 10-1 and 10-2 is determined to be about the sum of the width of two flow paths B' (that is, flow path B) and the thickness C of shield plate 40. When gas is ejected from battery cell 1 of one block 10, shield plate 40 thus disposed in this way has the peripheral part of shield plate 40 deform toward the other battery block 10 so as to form flow path B shown in FIGs. 5 and 6.

### Supporter 50

Supporter 50 supports shield plate 40. FIGs. 3 and 4 show an example of supporter 50. As shown in these figures, supporter 50 is provided at the inner side than respective outer peripheral parts of first block surface 11 and second block surface 12 of battery blocks 10 facing each other. The number of supporters 50 may be appropriately adjusted depending on the size of shield plate 40. For example, in Embodiment 1, four first supporters 51 in total, two in the vertical direction and two in the horizontal direction of first block surface 11 of battery block 10, are provided. Similarly, four second supporters 52 are provided at places corresponding to first supporters 51 on second block surface 12.

First supporter 51 and second supporter 52 may have arbitrary shapes as long as first supporter 51 and second supporter 52 may be connected to each other. In the present embodiment, first supporter 51 is convex, and second supporter 52 is a concave that can be connected to first supporter 51. First supporter 51 and second supporter 52 are connected to each other such that shield plate 40 are interposed between the supporters supporting shield plate 40. Shield-plate opening 41 may be provided in shield plate 40 at positions corresponding to first supporter 51 and second supporter 52. The size of shield-plate opening 41 is about a size through which, for example, distal end part 51a of first supporter 51 of FIG. 3 can penetrate. Distal end part 51a of first supporter 51 penetrating through shield-plate opening 41 is inserted into second supporter 52 and connected to second supporter 52 such that shield plate 40 is sandwiched from both sides thereof by first supporter 51 and second supporter 52. Thus, the periphery of the middle of shield plate 40 is fixed and supported.

The supporter and the shield plate of this exemplary embodiment are not limited to the above-mentioned example. For example, the first supporter may be concave, and the second supporter may be convex. Furthermore, shield plate 40 does not necessarily have shield-plate opening 41 therein, and the first supporter and the second supporter may be convex, and support by sandwiching shield plate 40 from the both sides.

Supporter 50 thus provided in the inner side than the outer peripheral parts of first block surface 11 and second block surface 12 does not support the outer peripheral part of shield plate 40 and the vicinity thereof while supporting the periphery of the middle part of shield plate 40. In other words, the peripheral part of shield plate 40 and the vicinity thereof are free end 42. Thus, as shown in FIG. 5, when discharge valve 3 is opened in battery cell 1L of battery block 10-1 and gas is ejected, high-temperature and high-pressure gas presses shield plate 40 including free end 42, and free end 42 of shield plate 40 is configured to deform in insulation space 30 toward the facing battery block 10-2. This configuration secures flow path B for discharging the ejected gas.

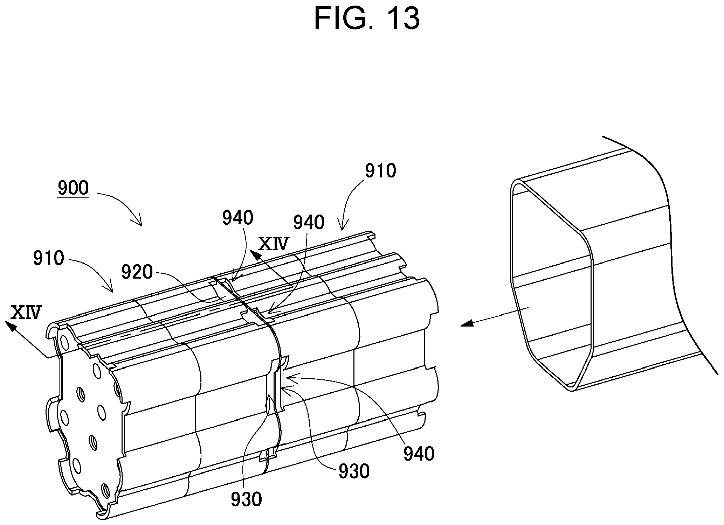

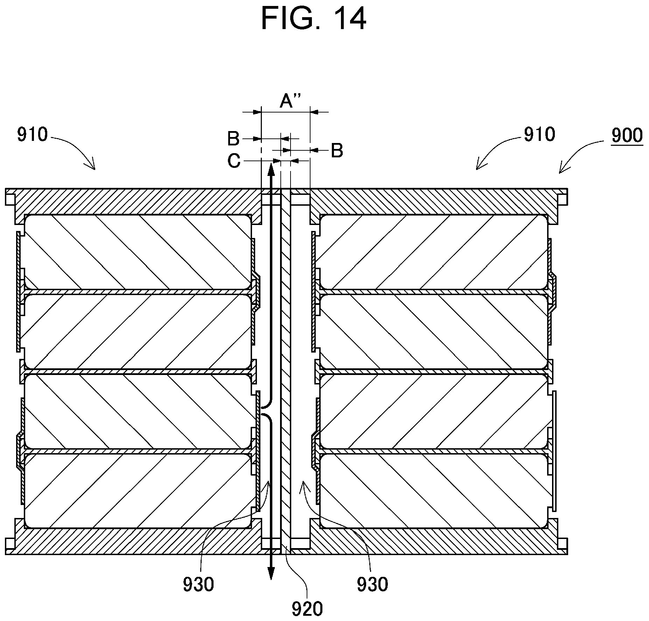

On the other hand, in conventional power supply device 900 shown in FIG. 13 or 14 including two battery blocks 910 and 910 which face each other and are connected to each other, the outer peripheral part of heat-resistant sheet 920 is fixed. In the convex part protruding from the peripheral part of the block surface of the battery block, heat-resistant sheet 920 is sandwiched from the both sides and fixed. In power supply device 900, since interfaces of facing battery blocks 910 are closed, discharge port 940 of gas is partially provided. However, the outer peripheral part of heat-resistant sheet 920 which is fixed, unlike Embodiment 1, prevents the peripheral part of heat-resistant sheet 920 from being displaced and forming path B. Therefore, the conventional device necessarily forms exhaust chambers 930 and 930 as path B for discharging gas on both sides of heat-resistant sheet 920.

Specifically, as shown in FIG. 14, heat-resistant sheet 920 is disposed in the middle part of the block surfaces of the facing battery blocks 910. Since peripheral parts of heat-resistant sheet 920 are fixed, exhaust chambers 930 and 930 are formed on both sides of heat-resistant sheet 920 to form two flow paths B for discharging gas.

In the case that the thickness of heat-resistant sheet 920 is the thickness C that is the same as the thickness of shield plate 40, separation distance A" between the block surfaces of battery blocks 910 are about the sum of the widths of the two flow paths B and the thickness C of heat-resistant sheet 920. That is, two flow paths B causes the separation distance A" between the block surfaces of battery block 910 to be wider than separation distance A by one width of flow path B in power supply device 100 of Embodiment 1.

On the contrary, in power supply device 100 of Embodiment 1, the outer peripheral part of shield plate 40 is displaceable free end 42. Therefore, if gas is ejected from any one of battery cells 1 of battery block 10, the outer peripheral part of shield plate 40 deforms toward another battery block 10 and forms path B for discharging gas. Thus, even if exhaust chambers 930 and 930 are not provided on both sides of heat-resistant sheet 920 as conventionally, one insulation space 30 are shared by battery blocks 10 on both sides, and allows battery blocks 10 to have a small size in the arranging direction. As a result, a power supply devices being thinner and smaller than conventional device is provided while securing safety, and the power supply device is applicable to various types of bicycles and the like.

### Exemplary Embodiment 2

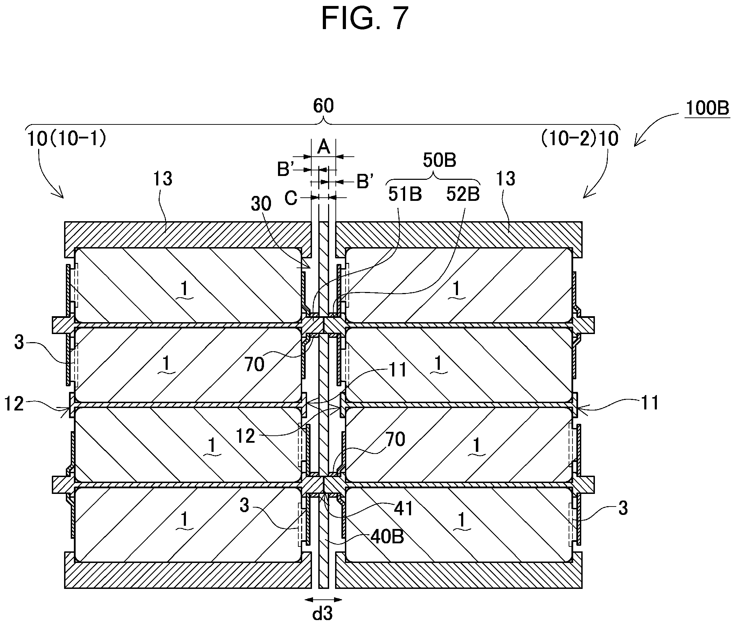

In the device according to Embodiment 1, shield plate 40 is made of carbon fibers, silica fibers, glass fibers, or flexible materials including these fibers impregnated with resin, and the inside of the outer peripheral part of shield plate 40 is fixed by supporter 50. However, the power supply device of this disclosure is not limited to the above-mentioned embodiment. FIG. 7 is a sectional view of a part of power supply device 100B in accordance with Exemplary Embodiment 2. In FIG. 7, components identical to those of the device according to Embodiment 1 are denoted by the same reference numerals, and the description thereof will be appropriately omitted.

Power supply device 100B includes shield plate 40B having rigidity to some extent instead of shield plate 40 having flexibility of Embodiment 1. For materials constituting shield plate 40B, previously known materials having thermal resistance can be appropriately used. Furthermore, a metal plate, a metal plate with an insulating material attached to a front surface and a rear surface of the metal plate, a metal plate with both surfaces thereof insulation-treated, a mica sheet, a fire-retardant fiber, or the like, can be used. The enhanced rigidity of shield plate 40B enhances durability of power supply device 100B.

Since this shield plate 40B has high rigidity, entire shield plate 40B is movable inside insulation space 30 to form flow path B, instead of deforming the outer peripheral part of shield plate 40B to form flow path B for discharging gas. That is, instead deforming a part of shield plate 40B, by moving shield plate 40B per se provides displacement of the outer peripheral part of the shield plate and secures a wide gas discharge flow path.

Specifically, instead of the embodiment in which the inside of the outer peripheral part of shield plate 40 is fixed by supporter 50 as in Embodiment 1, as in FIG. 7, shield plate 40B is movable on the outer peripheral surface of supporter 50B in which first supporter 51B and second supporter 52B are connected to each other in direction d3 of arrow 13 denoted (the left and right direction in Fig. 7).

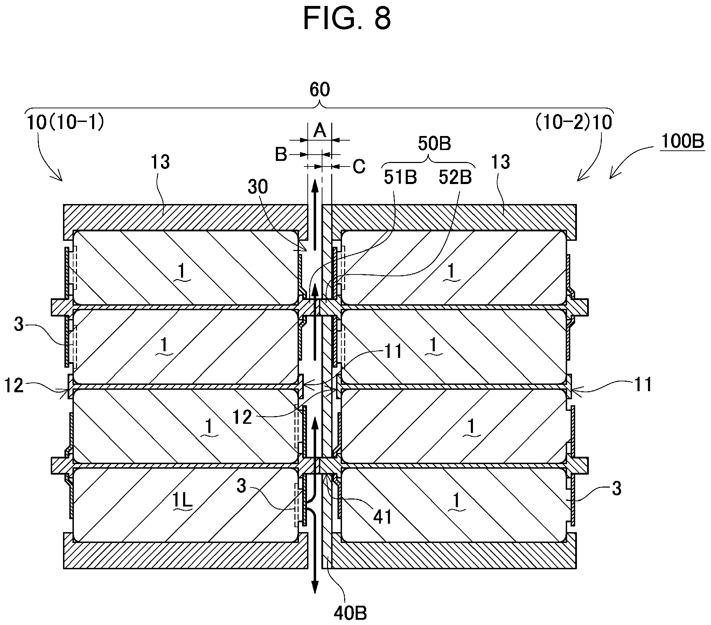

If gas is ejected from battery cell 1L of battery block 10-1, shield plate 40B of FIG. 8 moves toward battery block 10-2, and forms flow path B near battery block 10-1 for discharging gas.

### Auxiliary Support Part 70

Power supply device 100B may further include auxiliary support parts 70 configured to melt with heat. Auxiliary support part 70 restricts movement of shield plate 40B at normal time in which shield plate 40B is movable inside insulation space 30. This configuration avoids contact of shield plate 40B with the block surfaces due to outer vibration at normal time. This prevents noises from occurring due to contact between shield plate 40B and one of the block surfaces.

In power supply device 100 of FIG. 7, as one example, auxiliary support part 70 is provided between first block surface 11 of battery block 10-1 and second block surface 12 of battery block 10-2, and around supporters 50B. Auxiliary support part 70 may be made of, e.g., resin.

Shield plate 40B is safely held inside insulation space 30 by supporter 50B and auxiliary support part 70. On the other hand, when high-temperature and high-pressure gas is ejected from any one of secondary battery cells 1, since auxiliary support part 70 melts with heat, smooth discharge of gas can be achieved without preventing movement of shield plate 40B or discharge of gas.

When gas is discharged, the power supply device in accordance with Embodiment 2 secures a gas discharge path widely over the entire part by moving not a part but an entire part of shield plate 40B. That is, it is possible to avoid the case where a gas discharge path is partly narrowed, so that advantages that gas can be discharged more smoothly can be achieved.

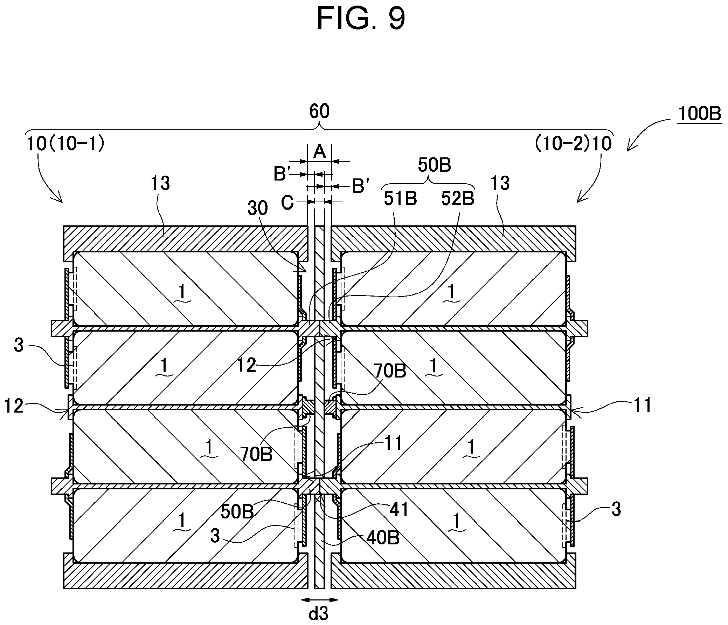

In the power supply device in accordance with Embodiment 2 mentioned above, auxiliary support part 70 melting with heat is provided around supporter 50B, but the present invention does not limit the position of auxiliary support part 70 to this configuration. For example, an auxiliary supporter may be further provided in a place that is different from that of the supporter. For example, as the power supply device shown in FIG. 9 according to a modified example, auxiliary support part 70B may be disposed between supporters 50B.

In this configuration, the thickness of auxiliary support part 70B may be increased and secure a wide contact area for holding shield plate 40B while holding shield plate 40B stably. Furthermore, auxiliary support parts 70B may be provided at plural positions. As a result, the number of sites holding the shield plate 40B by auxiliary support parts 70B is increased, and the vibration and rattling of the shield plate 40B can be suppressed more stably. In addition to auxiliary support part 70 shown in FIG. 7, auxiliary support part 70B may be added. In any case, auxiliary support part 70B is made of material configured to instantly melt with high-temperature and high-pressure gas, so that auxiliary support part 70B does not prevent gas discharge at the time of gas release.

The power supply device in accordance with Embodiment 2 has a configuration in which shield plate 40B has shield-plate opening 41 therein to allow supporter 50B to be inserted into shield-plate opening 4. However, the configuration is not limited to this configuration and the supporter may be omitted and shield plate 40B may be held by auxiliary support parts 70B. This configuration provides advantage that holding structure of shield plate 40B can be further simplified and can configured at lower cost.

### Exemplary Embodiment 3

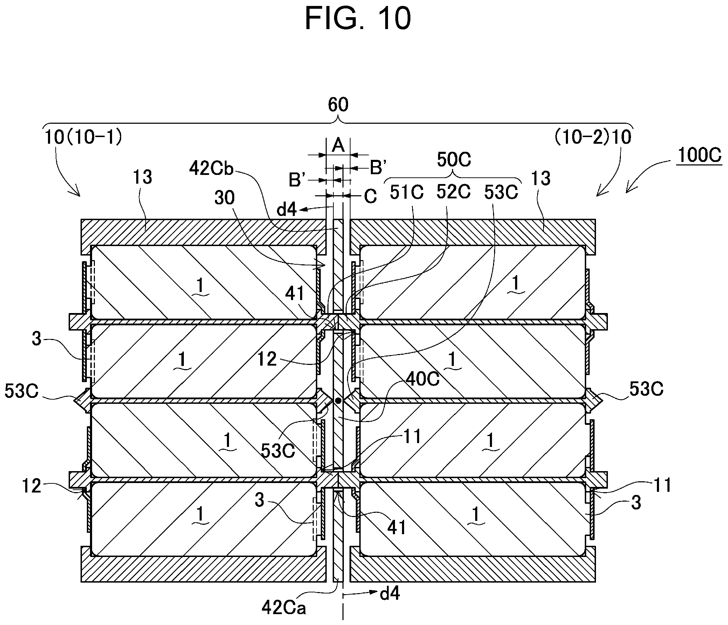

In the devices according to Embodiments 1 and 2, supporter 50 or support part 50B is provided in the inner side than the outer peripheral part of the block surface of each battery block 10 to support shield plate 40 or 40B. However, the power supply device of the present disclosure is not limited to the above embodiments. FIG. 10 is a sectional view of a part of power supply device 100C in accordance with Exemplary Embodiment 3. In FIG. 10, components identical those of the device of Embodiment 1 are denoted by the same reference numerals, and detailed description thereof will be appropriately omitted. In power supply device 100C, supporter 50C further includes third supporter 53C in the middle part of first block surface 11 and second block surface 12 of each battery block 10.

Similar to shield plate 40B of Embodiment 2, shield plate 40C in accordance with Embodiment 3 has some rigidity. In other words, by tilting shield plate 40C instead of deforming a part of shield plate 40C, the space for gas discharge is variable. Specifically, the middle part of shield plate 40C is tiltably sandwiched by third supporters 53C provided in first block surface 11 and second block surface 12, respectively. Third supporter 53C may appropriately have any configuration supporting the shield plate 40 C tiltably.

For example, third supporter 53C has a trigonal prismatic shape and linearly contact shield plate 40C to support shield plate 40C so that shield plate 40C may tilt about a rotating axis denoted by the black point in FIG. 10. The apex of the trigonal prismatic shape of third supporter 53C may be preferably curved rather than sharply angled. Alternatively, as the rotating shaft of shield plate 40C, a boss may protrude from the end surface of the shield plate and a shaft hole for receiving the boss may be formed in third supporter 53C so as to allow third supporter 53C to be tiltable. Alternatively, third supporter 53C may have a conical shape, the center of the shield plate 40C may be recessed and supported with respect to a point so as to allow the entire peripheral circumference of the shield plate of 360°to incline.

The power supply device may preferably further include a positioning mechanism in order to smoothly tilt shield plate 40C. In the example shown in FIG. 10, in addition to third supporter 53C, similar to the power supply device in accordance with Embodiment 2, shield-plate opening 41 is provided in the inner side of the outer peripheral part of shield plate 40C, and first supporter 51C and second supporter 52C are inserted into shield-plate opening 41 to position the shield plate.

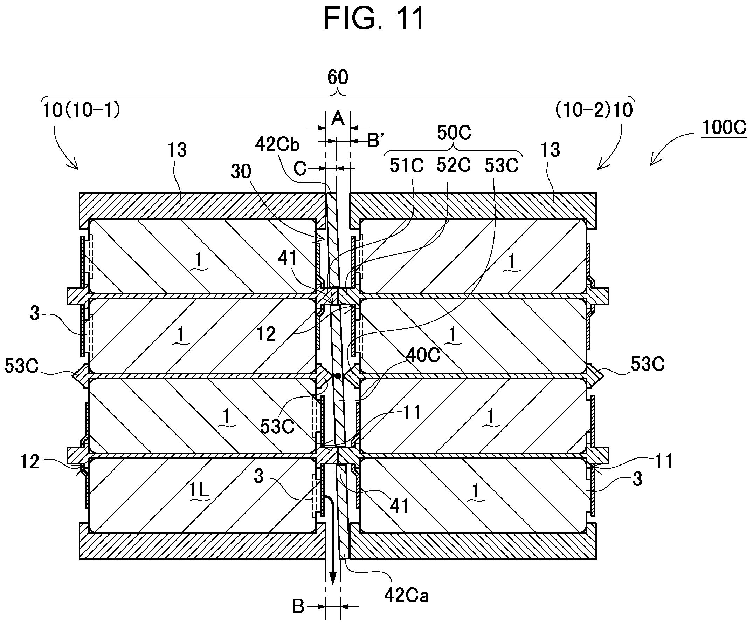

This configuration allows shield plate 40C to be movable about third supporter 53C in a rotational direction denoted by arrow d4 shown in FIG. 10. In FIG. 11, if gas is ejected from battery cell 1L of battery block 10-1, end part 42Ca of shield plate 40C near battery cell 1L moves toward battery block 10-2 due to the pressure of high-temperature and high-pressure gas, and forms flow path B for discharging gas. On the other hand, end part 42Cb at the opposite side of shield plate 40C moves toward battery cell 1L in which gas is ejected so as to close insulation space 30. As a result, flow path B for discharging gas can be formed in the side near battery cell 1L in which gas is ejected, so that an ejected gas is discharged in the shortest path.

As mentioned above, in the power supply device according to the present embodiment, the shield plate is not fixed but is floated. Thus, the volume of the gas discharge flow path demarcated by the shield plate may be variable, and the flow path may be widened on the side where gas is discharged. That is, the position of the shield plate is variable in a space in which a gas discharge amount flow path provided between the facing battery cells, so that two gas discharge paths may be provided by partitioning the common space.

In the above configuration, a gas discharge flow path that is merely used has a small size when not used reduces the size of the power supply device, when gas is discharged, a wide gas discharge flow path is secured on the corresponding side, so that similar safety can be secured. In particular, since the possibility that gas is discharged is extremely low, assuming that the gas is one of a lot of secondary battery cells even if gas is discharged, the device may reduce the gas discharge flow path, which is used to be uniformly provided for the secondary battery cells. Further, when the gas discharge path is used, a gas discharge flow path at the non-used side is used. Thereby, the same flow path volume is secured as conventionally and the advantage of not reducing safety is achieved.

### INDUSTRIAL APPLICABILITY

A power supply device of the present invention is usable as power supplies for powering electric vehicles such as electric bicycles, electric scooters, electric carts, and electric vehicles, and as power supplies for household and factory power storage devices.

### REFERENCE MARKS IN THE DRAWINGS

100, 100B, 100C power supply device
1 battery cell
1L, 1R battery cell in which gas is ejected
2 exterior can
3 discharge valve
4 end electrode
4a first end electrode
4b second end electrode
5 lead plate
10 battery block
10-1, 10-2, 10-3 battery block
11 first block surface
12 second block surface
13 battery holder
13a insertion section
14 opening
20 exterior case
30 insulation space
40, 40B, 40C shield plate
41 shield-plate opening
42 free end
42Ca, 42Cb end part
50, 50B, 50C supporter
51, 51B, 51C first supporter
51a distal end part
52, 52B, 52C second supporter
53C third supporter
60 battery assembly
70, 70B auxiliary support part
90, 900 power supply device
910 battery block
91 secondary battery cell
92 battery unit
93, 920 heat-resistant sheet
94, 930 exhaust chamber
940 discharge port
95 outer peripheral frame part
A, A" separation distance
B, B' flow path

## Claims

1. A power supply device comprising:
a plurality of battery cells including exterior cans and discharge valves, each of the plurality of battery cells including a corresponding one of the exterior cans and a corresponding one of the discharge valves, the corresponding one of the exterior cans having a tubular shape extending in one direction, the corresponding one of the discharge valves being provided at an end surface of the tubular shape of the corresponding one of the exterior cans, the corresponding one of the discharge valves being configured to discharge gas in response to an increase of an internal pressure of the corresponding one of the exterior cases;
a plurality of battery blocks holding the plurality of battery cells, each of the plurality of battery blocks holding two or more battery cells out of the plurality of battery cells such that the exterior cans are parallel to one another and end surfaces of the exterior cans of the two or more battery cells are flush with a plane;
a shield plate disposed in an insulation space between adjacent battery blocks out of the plurality of the battery blocks, a block surface of one of the adjacent battery blocks at which end surfaces of the exterior cans of the two or more battery cells faces, across the insulation space, a block surface of another of the adjacent battery blocks at which end surfaces of the exterior cans of the two or more battery cells; and
a supporter supporting the shield plate, the supporter being provided on an inner side of outer peripheral parts of the block surfaces of the plurality of battery blocks facing each other, wherein
the shield plate supported by the supporter includes an outer peripheral part that is a free end displaceable with respect to the supporter.

2. The power supply device according to claim 1, wherein the supporter includes:
a first supporter provided on a first block surface which is the block surface of the one of the adjacent battery blocks facing each other; and
a second supporter provided on a second block surface which is the block surface of the another of the adjacent battery blocks at a position corresponding to the first supporter, the second supporter being connected to the first supporter through the shield plate.

3. The power supply device according to claim 1 or 2, wherein
the shield plate has a shield-plate opening therein at a position corresponding to the supporter, and
the supporter is inserted into the shield-plate opening.

4. The power supply device according to any one of claims 1 to 3, wherein the supporter is one of a plurality of supporters provided on end surfaces of the plurality of battery blocks.

5. The power supply device according to any one of claims 1 to 4, wherein
the supporter is provided at a middle part of each end surface of the battery block, and
the shield plate is movable in a rotation direction about the supporter.

6. The power supply device according to any one of claims 1 to 5, further comprising a plurality of auxiliary support parts provided between the block surfaces of the adjacent battery blocks facing each other, the plurality of auxiliary support parts being configured to melt with heat.

7. The power supply device according to any one of claims 1 to 6, wherein the shield plate is made of carbon fibers, silica fibers, glass fibers, or flexible materials, the flexible materials including carbon fibers, silica fibers, or glass fibers and impregnated with resin.

8. The power supply device according to any one of claims 1 to 6, wherein the shield plate is made of a metal plate, a metal plate with an insulating material attached to both surfaces of the metal plate, a metal plate with both surfaces thereof insulation-treated, a mica sheet, or fire-retardant fibers.
